(19) Europäisches Patentamt
European Patent Office
Office européen des brevets

(11) **EP 3 359 474 B1**

(12) **FASCICULE DE BREVET EUROPEEN**

(45) Date de publication et mention de la délivrance du brevet:
**11.09.2019 Bulletin 2019/37**

(51) Int Cl.:
***B65G 17/48*** *(2006.01)*      ***B29C 49/42*** *(2006.01)*
***B65G 47/86*** *(2006.01)*

(21) Numéro de dépôt: **16793952.9**

(22) Date de dépôt: **07.10.2016**

(86) Numéro de dépôt international:
**PCT/FR2016/052603**

(87) Numéro de publication internationale:
**WO 2017/060654 (13.04.2017 Gazette 2017/15)**

(54) **LIGNE DE PRODUCTION DE RECIPIENTS PAR SOUFFLAGE DE PREFORMES AVEC UN ELEMENT TOURNANT DE REFERENCE**

STRASSE FÜR DIE HERSTELLUNG VON BEHÄLTERN DURCH BLASFORMEN VON VORFORMLINGEN MIT DREHBAREM REFERENZELEMENT

LINE FOR PRODUCING CONTAINERS BY BLOW MOULDING PREFORMS WITH A ROTATABLE REFERENCE ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2015 FR 1559571**

(43) Date de publication de la demande:
**15.08.2018 Bulletin 2018/33**

(73) Titulaire: **Sidel Participations**
**76930 Octeville-sur-Mer (FR)**

(72) Inventeur: **PETIT, Fabian**
**76930 Octeville-sur-Mer (FR)**

(74) Mandataire: **Grassin d'Alphonse, Emmanuel Jean Marie**
**Sidel Participations**
**Avenue de la Patrouille de France**
**76930 Octeville-sur-mer (FR)**

(56) Documents cités:
**WO-A2-2014/207582      FR-A1- 2 872 805**
**FR-A1- 2 890 061**

**Description**

L'invention a trait aux lignes de production de récipients par soufflage ou étirage soufflage de préformes comprenant un élément tournant de référence et un élément tournant auxiliaire. La ligne de production présente une continuité d'entrainement entre l'élément tournant de référence et l'élément tournant auxiliaire, par exemple avec un rapport de réduction.

En particulier, l'invention a trait à ligne de production dans laquelle l'élément tournant auxiliaire est une roue d'une installation de transport de préformes et l'élément tournant de référence est un carrousel de souffleuse sur lequel sont montés une pluralité de moules ayant l'empreinte des récipients. La ligne de production est munie d'un moyen de détermination de la position angulaire instantanée de l'élément tournant de référence.

Une préforme est un corps creux en matière plastique en polytéréphtalate d'éthylène (PET) et comprend classiquement un corps cylindrique qui se termine par un fond hémisphérique, un col qui présente sa forme finale, et une collerette séparant le col du corps.

Dans une installation de fabrication de récipients à partir de préformes, les préformes brutes d'injection sont ordinairement stockées en vrac dans un conteneur. Les préformes sont d'abord prélevées du conteneur, orientées et ordonnées en ligne pour être introduites dans une unité de conditionnement thermique (plus simplement dénommée « four ») équipée d'émetteurs infrarouge, où les préformes sont portées à une température supérieure à leur température de transition vitreuse (laquelle est d'environ 80°C pour le PET). Les préformes chaudes sont alors transférées vers une unité de formage équipée d'une pluralité de moules dans lesquels les préformes sont formées à l'empreinte des récipients par soufflage ou étirage soufflage.

Dans le four, les préformes sont convoyées en ligne au moyen d'une chaîne de transport comprenant une pluralité de maillons ayant chacun une platine et au moins une tournette montée sur la platine. La tournette comprend une douille fixée sur la platine et un mandrin pourvu d'une tête. Le mandrin est monté en translation par rapport à la douille entre une position inactive dans laquelle la tête est logée dans la douille, et une position active dans laquelle la tête fait saillie par rapport à une face inférieure de la douille pour s'emmancher dans le col d'une préforme. En outre, la tournette est entraînée en rotation par rapport à la platine, au cours de la translation de la chaîne, au moyen d'une crémaillère qui engrène un pignon solidaire du mandrin. De la sorte, la préforme emboîtée sur la tête du mandrin est entraînée à la fois en translation et en rotation dans le four, de manière à être pleinement exposée au rayonnement des émetteurs infrarouge.

La structure d'une telle chaîne de transport est bien décrite dans le brevet européen EP 0 935 572 (Sidel). Cette chaîne est habituellement montée entre deux roues dentées (ou échancrées), à savoir une roue motrice, qui entraîne la chaîne, et une roue suiveuse. L'une des roues (par exemple la roue motrice) est placée en amont du four, et l'autre (par exemple la roue suiveuse) en aval de celui-ci.

Les préformes en provenance du conteneur sont chargées sur la roue amont au moyen d'un rail ou d'une roue dentée, chaque préforme venant à l'aplomb d'une tournette dont le mandrin est en position inactive. Au cours de la rotation de la roue amont, le mandrin est déplacé vers sa position active, la tête venant s'emboîter dans le col de la préforme, qui se trouve ainsi solidarisée en rotation du mandrin. Dès lors que le pignon vient engrener la crémaillère à l'entrée du four, la préforme est entraînée en rotation.

La cadence de production d'une telle installation est généralement de l'ordre de 50 000 récipients par heure, ce qui correspond à la cadence de défilement des préformes dans le four. La roue amont comprend ordinairement environ 45 dents d'entraînement : sa vitesse de rotation est donc de l'ordre de 18 tours par minute. Comme la roue présente un diamètre d'environ 1 m, la vitesse tangentielle des préformes sur la roue est de l'ordre de 1 m/s. A cette vitesse assez élevée, des problèmes de positionnement peuvent se produire ; de fait, il arrive qu'une préforme ne soit pas correctement centrée par rapport au mandrin, qui ne peut dès lors pas s'emboîter correctement dans le col. A la sortie de la roue, une préforme qui n'est pas tenue correctement peut être projetée et venir endommager certaines pièces du four (notamment les émetteurs infrarouge, qui sont généralement fragiles). La projection est encore plus violente lorsque les préformes, généralement orientées col en haut dans la roue, sont retournées à la sortie de celle-ci pour être chauffées col en bas dans le four. Qu'une préforme soit manquante sur la ligne de production ne pose pas de problème particulier, mais, pour des raisons de sécurité, on ne peut laisser l'installation fonctionner avec des pièces endommagées, de même qu'il n'est pas souhaitable de laisser des préformes traîner au pied de la roue ou, pire, dans le four. Il est donc nécessaire de stopper la roue, ce qui interrompt toute la production, le temps de débarrasser l'installation des préformes éjectées.

Le document FR2872805 décrit un mécanisme pouvant éjecter des préformes avant le four, selon le préambule de la revendication 1. Un capteur détectant un défaut de vétissage d'une préforme, commande un vérin pour faire remonter le mandrin de la tournette et permettre l'éjection de préformes. Cependant, un tel dispositif peut présenter l'inconvénient de devoir éjecter un nombre trop important de préformes dès qu'un défaut de vétissage est détecté. La quantité de préformes devant être éjectées pour supprimer la préforme mal fixée sur un mandrin de tournette augmente avec la cadence de production.

Un objectif de l'invention est de permettre une éjection contrôlée, rapide et fiable des préformes mal positionnées. En particulier, l'objectif peut être de proposer une solution permettant de de réduire le nombre de préformes éjectées lorsqu'un défaut de vétissage apparait. Cela permet de garantir la continuité de la production sans dégrader le rendement de production en cas de défaut de positionnement d'une préforme. Cela permet d'assurer la sécurité de l'installation, tant pour le matériel que pour le personnel.

Selon un mode de réalisation, la Ligne de production de récipients par soufflage ou étirage soufflage de préformes, la ligne de production comprend :

- un élément tournant auxiliaire,
- un élément tournant de référence muni d'un moyen de détermination de la position angulaire instantanée de l'élément tournant de référence,
- la ligne de production présentant une continuité d'entrainement avec un rapport de réduction entre l'élément tournant de référence et l'élément tournant auxiliaire,

Selon l'invention, la ligne de production est munie d'un dispositif de détermination de la position angulaire instantanée de l'élément tournant auxiliaire, ledit dispositif comprenant :

- un capteur d'initialisation capable à chaque tour de l'élément tournant auxiliaire de déterminer un instant initial pour lequel la position angulaire de l'élément tournant auxiliaire est nulle, et
- un calculateur relié au capteur d'initialisation et recevant à chaque instant une information de position angulaire instantanée dudit élément tournant de référence, le calculateur étant apte, en vertu dudit rapport de réduction et de l'instant initial, à déduire la position angulaire instantané de l'élément tournant auxiliaire.

Selon un mode particulier de réalisation, la ligne de production comprend :

- une installation de transport de préformes comprenant un bâti fixe, l'élément tournant auxiliaire étant une roue de l'installation de transport de préformes, la roue étant en rotation par rapport au bâti fixe, et
- une souffleuse, les préformes transportées par l'installation de transport étant conformées en récipients au sein de la souffleuse, ledit élément tournant de référence étant un carrousel de la souffleuse sur lequel sont montés une pluralité de moules ayant l'empreinte des récipients.

Selon un mode de réalisation, les préformes sont des corps creux en matière plastique ayant chacun un corps cylindrique, un col et une collerette séparant le col du corps, et l'installation de transport est munie d'une chaîne de transport comprenant une pluralité de maillons ayant chacun une platine, une douille fixée sur la platine et un mandrin pourvu d'une tête et monté en translation par rapport à la douille entre une position inactive dans laquelle la tête est logée dans la douille, et une position active dans laquelle la tête fait saillie par rapport à une face inférieure de la douille pour s'emmancher dans le col de la préforme.

Ladite roue engrène la chaîne de transport et comprend :

o une couronne montée en rotation par rapport au bâti,
o une pluralité de poussoirs propres chacun à venir en prise d'engrenage avec un mandrin, chaque poussoir étant monté en translation par rapport à la couronne entre une position inactive dans laquelle, lorsque le poussoir est en prise avec un mandrin, il place celui-ci en position inactive, et une position active dans laquelle, lorsque le poussoir est en prise avec un mandrin, il place celui-ci en position active.

Avantageusement, l'installation de transport de préformes définit une zone (ZV) de vêtissage dans laquelle les poussoirs en prise d'engrenage avec des mandrins (22) sont placés en position active, l'installation de transport de préformes comportant un système détrompeur comprenant :

- un capteur positionné dans la zone (ZV) de vêtissage, propre à détecter tout écartement d'un poussoir de sa position active ; et
- un dispositif d'éjection positionné dans la zone (ZV) de vêtissage et comprenant un actionneur mobile entre un position de libre passage dans laquelle l'actionneur est écarté des poussoirs, et une position d'éjection dans laquelle l'actionneur déplace vers sa position inactive tout poussoir détecté comme écarté de sa position active.

Grâce au système détrompeur, toute préforme mal positionnée est éjectée de la roue de manière contrôlée, au bénéfice, d'une part, de la sécurité des matériels et des personnels alentour, et d'autre part au bénéfice de la production, l'éjection de la préforme ne nécessitant ni l'arrêt ni même le ralentissement de la roue.

Diverses caractéristiques supplémentaires peuvent être prévues, seules ou en combinaison :

- le système détrompeur comporte un vérin comprenant un corps de vérin solidaire du bâti et un piston monté coulissant dans le corps de vérin, et l'actionneur se présente sous forme d'une came solidaire du piston ;
- chaque poussoir porte un galet supérieur qui, en position d'éjection de l'actionneur, vient coopérer avec la came le constituant ;
- la came comprend trois rampes décalées angulairement et, dans la roue, trois poussoirs adjacents comprennent des galets supérieurs décalés radialement, aptes chacun à coopérer avec une rampe en position d'éjection de l'actionneur ;
- le capteur du système détrompeur est un capteur de proximité ;
- chaque poussoir comprend un corps métallique incluant un méplat en saillie qui, en position active, s'étend à hauteur du capteur de proximité ;
- le capteur d'initialisation est un capteur de proximité, et l'un des poussoirs est pourvu d'un drapeau muni d'une partie saillante qui s'étend à hauteur du capteur d'initialisation ;
- l'installation comprend une unité de contrôle reliée au capteur et à l'actionneur du dispositif détrompeur, l'unité de contrôle étant programmée pour commander l'actionneur lorsqu'un poussoir est détecté par le capteur dans sa position inactive.

D'autres objets et avantages de l'invention apparaîtront à la lumière de la description d'un mode de réalisation, faite ci-après en référence aux dessins annexés dans lesquels :

- la figure 1 est une vue en perspective d'une partie d'une installation de transport de préformes, selon un premier angle de vue ;
- la figure 2 est une vue en perspective de la partie de l'installation visible sur la figure 1, selon un deuxième angle de vue, avec, en médaillon, un détail à plus grande échelle ;
- la figure 3 est une vue de dessus de la partie de l'installation visible sur les figures 1 et 2 ;
- la figure 4 est une vue en coupe partielle selon le plan IV-IV de la figure 3 ;
- la figure 5 est une vue en coupe partielle selon le plan V-V de la figure 3 ;
- la figure 6 est une vue en coupe partielle selon le plan VI-VI de la figure 3 ;
- la figure 7 est une vue en coupe partielle selon le plan VII-VII de la figure 3 ;
- la figure 8 est une vue en coupe partielle selon le plan VIII-VIII de la figure 3.

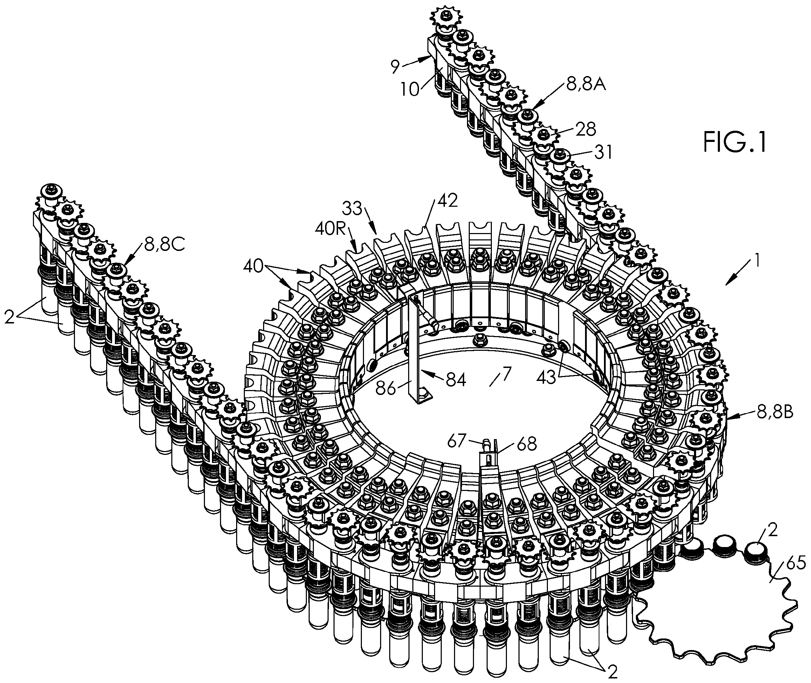

Sur la figure 1 est représentée une partie d'une installation **1** de transport de corps creux **2** en matière plastique. Dans la description qui suit, les corps creux représentés sont des préformes de récipients à partir desquelles doivent être formés (par soufflage ou étirage soufflage) des récipients, l'installation **1** étant destinée à être intégrée à une ligne complète de production de récipients à partir de préformes. Aussi, dans la description qui suit, la référence **2** est utilisée pour désigner une ou plusieurs "préformes", étant entendu que l'installation de transport, moyennant des modifications essentiellement dimensionnelles, pourrait être utilisée pour transporter d'autres types de corps creux notamment des récipients intermédiaires ou des récipients finaux tels qu'on peut en rencontrer dans des installations de fabrication ou de traitement de récipients.

Chaque corps creux **2** comprend un corps **3** (cylindrique dans le cas d'une préforme; de formes diverses dans le cas d'un récipient final ou intermédiaire), un col **4** qui s'étend à partir d'une extrémité supérieure du corps **3,** une collerette **5** qui sépare le col **4** du corps **3,** et un fond **6** qui s'étend à une extrémité inférieure du corps **3,** opposée au col **4.**

L'installation **1** est par exemple prévue pour transporter les préformes **2** dans une unité de conditionnement thermique (non représentée) où les préformes **2** doivent être chauffées à une température supérieure à leur température de transition vitreuse, en vue d'être ensuite conformées en récipients au sein d'une unité de formage (non représentée), également appelée souffleuse, intégrée à la même ligne de production et équipée d'un carrousel sur lequel sont montés une pluralité de moules à l'empreinte des récipients.

L'installation **1** comprend un bâti **7** fixe et une chaîne **8** de transport montée déplaçable par rapport au bâti **7.** La chaîne **8** comprend une pluralité de maillons **9** ayant chacun une platine **10** et au moins une tournette **11** portée par la platine **10.** Dans l'exemple de réalisation illustré, chaque maillon **9** inclut une paire de tournettes **11** portées par la même platine **10.**

Selon un mode préféré de réalisation, la platine **10** se présente sous forme d'une pièce monobloc (par exemple en acier ou en aluminium) définissant une paire de chapes **12** adossées, dans lesquelles sont montés en rotation deux attelages **13** (à savoir un attelage mâle et un attelage femelle) pour l'interconnexion avec les maillons **9** adjacents.

Chaque tournette **11** comprend, en premier lieu, une douille **14** fixée sur la platine **10,** éventuellement avec possibilité de rotation. Plus précisément, la douille **14** comprend un manchon **15** tubulaire qui s'étend au travers de la chape **12,** avec jeu (pour permettre la rotation de la douille **14** par rapport à la platine **10**), ou de manière serrée (pour, au contraire, rendre solidaire la douille **14** de la platine **10**). Le manchon **15** comprend un alésage **16** central qui définit un axe **X** vertical. A une extrémité inférieure du manchon **15,** la douille **14** présente une section **17** élargie munie d'une gorge **18** périphérique. La section **17** élargie se prolonge par une jupe **19** cylindrique qui, comme illustré sur les figures, est avantageusement ajourée aux fins de légèreté et présente, à une extrémité inférieure, une face **20** inférieure annulaire. A une extrémité supérieure du manchon **15,** la douille **14** porte un anneau **21** qui assure, conjointement avec la section **17** élargie, la fixation en translation de la douille **14** par rapport à la platine **10.**

Chaque tournette **11** comprend, en deuxième lieu, un mandrin **22** monté en translation, suivant l'axe **X** vertical, par rapport à la douille **14.** Le mandrin **22** comprend une tige **23** cylindrique montée en libre rotation autour de l'axe **X** dans l'alésage **16** de la douille **14,** avec interposition de paliers **24** (par exemple sous forme de bagues réalisées dans un matériau à faible coefficient de friction, typiquement en bronze ou en polytétrafluoroéthylène). Le mandrin **22** comprend, à une extrémité inférieure de la tige **23,** une tête **25** de plus grand diamètre, qui s'étend dans la jupe **19** de la douille **14.**

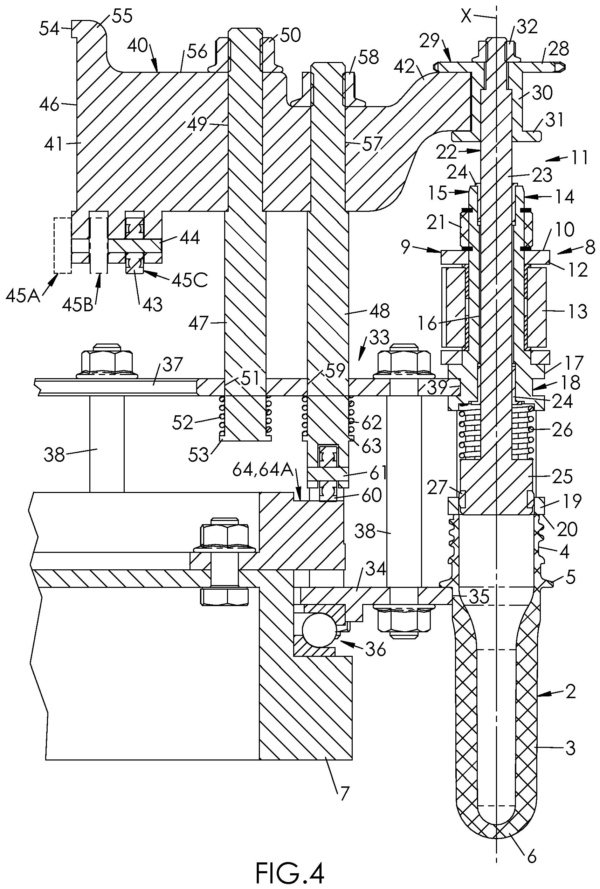

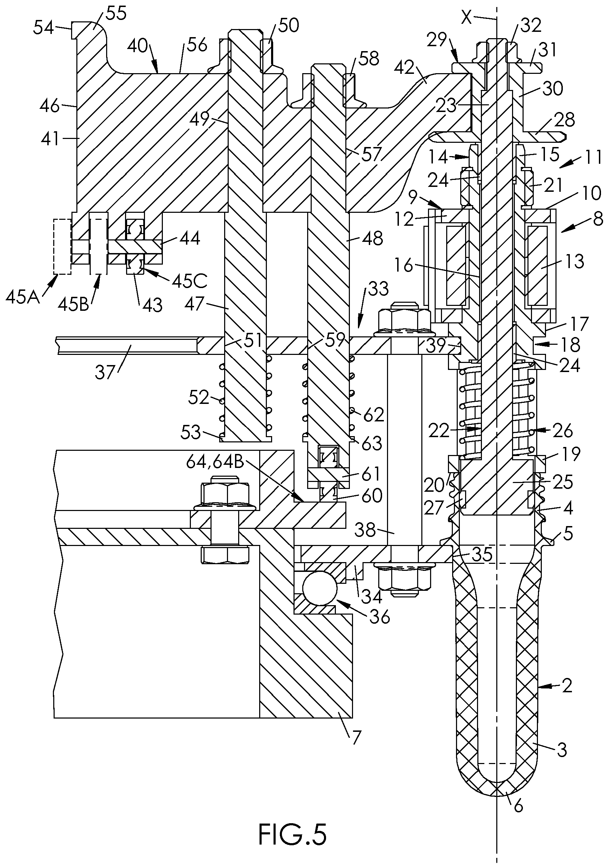

Le mandrin **22** est monté non seulement en libre rotation par rapport à la douille **14,** mais également en translation, entre une position inactive (figure 4), dans laquelle la tête **25** est logée dans la jupe **19,** et une position active dans laquelle la tête **25** fait saillie par rapport à la face **20** inférieure de la douille **14** pour s'emmancher dans le col **4** d'une préforme **2** (figure 5).

Comme on le voit sur la figure 4, la tournette **11** comprend un ressort **26** de rappel interposé entre la tête **25** du mandrin **22** et la douille **14.** Plus précisément, ce ressort **26,** qui fonctionne en compression, est interposé entre une face supérieure de la tête **25** et un lamage formé dans la section **17** élargie de la douille **14.**

Selon un mode préféré de réalisation, la tête **25** du mandrin **22** est pourvue d'un joint **27** torique, avantageusement réalisé dans un matériau élastique (tel qu'un élastomère), et dont le diamètre externe est égal ou légèrement supérieur au diamètre interne du col **4** d'une préforme **2,** de façon à assurer la sustentation de la préforme **2** par frottement contre la paroi interne du col **4,** lorsque la tête **25** est en position active.

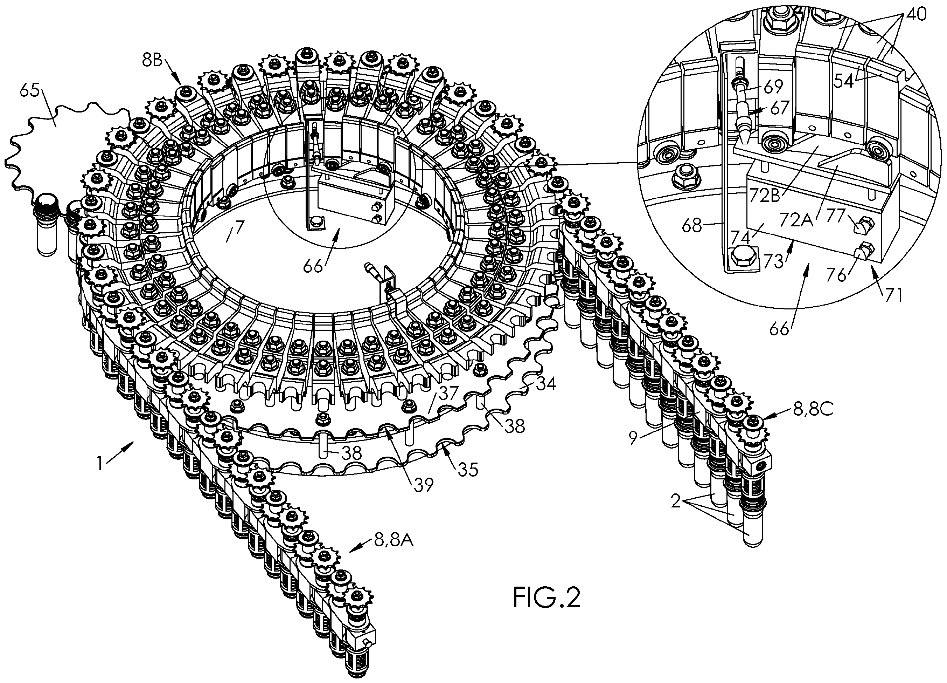

A une extrémité supérieure, le mandrin **22** est pourvu d'un pignon **28** monté sur la tige **23,** solidaire en rotation de celle-ci. Dans l'exemple illustré sur la figure 4, le pignon **28** est intégré à un embout **29** en forme de bobine qui comprend un fût **30** à une extrémité duquel s'étend le pignon **28** et, à l'opposé de celui-ci, un flasque **31** de diamètre inférieur au pignon **28.** L'embout **29** (et donc le pignon **28**) est fixé sur la tige **23** par exemple au moyen d'un écrou **32.** Le pignon **28** est destiné à engrener une crémaillère (non représentée) qui s'étend le long de l'unité de chauffe, de façon à entraîner la tournette **11** en rotation et ainsi exposer tout le corps **3** de la préforme **2** au rayonnement infrarouge. Comme on le voit sur les figures 1 et 2, les embouts **29** de deux tournettes **11** adjacentes sont montés tête bêche pour minimiser leur entraxe.

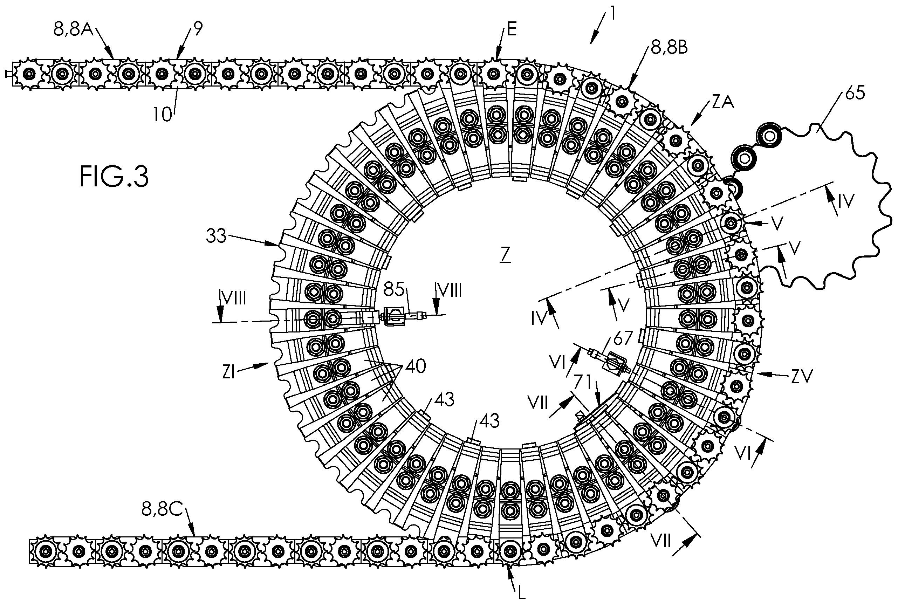

L'installation **1** comprend, par ailleurs, une première roue **33,** qui est de préférence menante (mais pourrait être menée) et qui engrène la chaîne **8** de transport entre un point **E** d'engrenage et un point **L** de libération, et une deuxième roue (non représentée), qui est de préférence menée (mais pourrait être menante) sur laquelle circule également la chaîne **8.** Selon un mode de réalisation illustré sur la figure 3, le point **E** d'engrenage et le point L de libération sont diamétralement opposés à la périphérie de la roue **33** mais cette configuration n'est nullement limitative. La chaîne **8** comprend un brin **8A** retour, linéaire, où les maillons **9** sont écartés de la roue **33,** un brin **8B** engrené, qui s'étend en arc de cercle du point **E** d'engrenage au point **L** de libération, et un brin **8C** aller, linéaire, où les maillons **9** sont à nouveau écartés de la roue **33.** Sur la roue **33,** la chaîne **8** circule du point **E** d'engrenage vers le point **L** de libération (sens horaire sur la figure 3).

Comme on le voit sur les figures, les préformes **2** sont convoyées col en haut sur la roue **33.** Si les préformes **2** doivent ensuite être convoyées col en bas dans l'unité de conditionnement, un retournement doit s'opérer en aval de la roue **33.** A cet effet, les attelages **13** des maillons **9** adjacents peuvent être interconnectés de manière tournante autour d'un axe horizontal, de façon à permettre la rotation des maillons autour de cet axe. Dans ce cas, chaque maillon **9** est pourvu d'au moins un galet latéral destiné à coopérer avec une came hélicoïdale grâce à laquelle s'opère le retournement du maillon, par exemple le long du brin **8C** aller.

La roue **33** comprend, en premier lieu, une couronne **34** inférieure dentée montée en rotation par rapport au bâti **7.** La couronne **34** inférieure comprend une pluralité d'échancrures **35** périphériques (notamment au nombre de 45) dans chacune desquelles vient successivement s'emboîter radialement le corps **3** d'une préforme **2,** sous la collerette **5,** celle-ci venant reposer sur la couronne **34** inférieure. Selon un mode de réalisation illustré sur la figure 3, la rotation de la roue **33** par rapport au bâti **7** est assurée au moyen d'un roulement **36** à billes (ou à rouleaux).

La roue **33** comprend, en deuxième lieu, une couronne **37** supérieure dentée, solidaire de la couronne **34** inférieure. Selon un mode de réalisation illustré sur les figures, la fixation de la couronne **37** supérieure sur la couronne **34** inférieure est réalisée au moyen d'entretoises **38** boulonnées.

La couronne **37** supérieure est pourvue, sur sa périphérie, d'une pluralité d'alvéoles **39** périphériques (notamment au nombre de 45), chacun situé à l'aplomb d'une échancrure **35** de la couronne **34** inférieure. Chaque alvéole **39** est agencé pour engrener la gorge **18** d'une douille **14** qui se trouve ainsi bloquée en translation suivant l'axe **X** vertical.

La roue **33** comprend, en troisième lieu, une pluralité de poussoirs **40** propres chacun à venir en prise d'engrenage avec un mandrin **22**. Chaque poussoir **40** comprend un corps **41** métallique (par exemple en aluminium) qui s'étend radialement et présente, à une extrémité externe, une queue **42** conformée en fourchette pour venir en prise d'engrenage avec le fût **30** de l'embout **29**, entre le pignon **28** et le flasque **31**.

Comme illustré sur la figure 4, chaque poussoir **40** comprend un galet **43** supérieur (tel qu'un roulement à billes), monté en rotation par rapport au corps **41**. Dans l'exemple de réalisation illustré, le galet **43** supérieur est monté sur un axe **44** solidaire du corps **41** du côté d'une extrémité interne de celui-ci. Plus précisément, trois emplacements sont définis pour le montage du galet supérieur : un emplacement **45A** interne, où le galet **43** supérieur (illustré en pointillés sur la figure 4) s'étend en saillie d'une face **46** interne du corps ; un emplacement **45B** intermédiaire, illustré en trait mixte sur la figure 4, décalé radialement vers l'extérieur par rapport à l'emplacement **45A** interne, et un emplacement **45C** externe, illustré en trait plein sur la figure **4,** décalé radialement vers l'extérieur par rapport à l'emplacement **45B** intermédiaire.

Pour des raisons qui apparaîtront ci-après, les galets **43** supérieurs de trois poussoirs **40** successifs sont montés à trois emplacements **45A, 45B, 45C** différents sur les corps **41** de leurs poussoirs **40** respectifs, de sorte que, dans l'ensemble de la roue **33**, les galets **43** supérieurs sont, pour un premier tiers, montés à l'emplacement **45A** interne, pour un deuxième tiers, montés à l'emplacement **45B** intermédiaire, et pour un troisième tiers à l'emplacement **45C** externe.

Chaque poussoir **40** est monté en translation parallèlement à l'axe **X** vertical au moyen d'une paire de guides, à savoir un guide **47** interne et un guide **48** externe. Le guide **47** interne se présente sous forme d'une tige dont une section supérieure est emmanchée dans un trou **49** traversant pratiqué dans le corps **41** du poussoir **40,** auquel le guide **47** interne est fixé au moyen d'un écrou **50**. Une section inférieure du guide **47** interne est emmanchée dans un trou **51** pratiqué dans la couronne **37** supérieure dont elle dépasse vers le bas, avec possibilité de translation verticale. Un ressort **52** de rappel fonctionnant en compression est interposé entre la couronne supérieure et une collerette **53** formée à une extrémité inférieure du guide **47** interne.

Comme cela est visible sur les figures 4 à 7, le corps **41** du poussoir **40** présente un méplat **54** qui s'étend en saillie radiale, vers l'intérieur, par rapport à la face **46** interne. Dans l'exemple illustré, ce méplat **54,** dont la fonction sera expliquée ci-après, peut être formé au sommet d'un doigt **55** formé en saillie verticale à partir d'une face **56** supérieure du corps **41**.

Comme le guide **47** interne, le guide **48** externe comprend une section supérieure emmanchée dans un trou **57** traversant pratiqué dans le corps **41** du poussoir **40,** auquel le guide **48** externe est fixé au moyen d'un écrou **58**. Une section inférieure du guide **48** externe est emmanchée dans un trou **59** pratiqué dans la couronne **37** supérieure dont elle dépasse vers le bas, avec possibilité de translation verticale. A une extrémité inférieure, le guide **48** externe est conformé en chape ; un galet **60** inférieur (tel qu'un roulement à billes) est monté en rotation par rapport au guide **48** externe autour d'un axe **61** monté dans cette chape. Un ressort **62** de rappel fonctionnant en compression est interposé entre la couronne **37** supérieure et une collerette **63** formée radialement en saillie sur le guide **48** externe, à la périphérie de sa section inférieure.

Le poussoir **40** est ainsi monté en translation, par rapport à la couronne **37** supérieure, entre une position inactive dans laquelle, lorsque le poussoir **40** est en prise avec un mandrin **22** (c'est-à-dire que la queue **42** est en prise d'engrenage avec l'embout **29**), il place celui-ci en position inactive (figure 4), et une position active dans laquelle, lorsque le poussoir **40** est en prise avec un mandrin **22**, il place celui-ci en position active (figure 5), cependant que la douille **14** est maintenue en position par coopération de l'alvéole **39** de la couronne **37** supérieure avec la gorge **18**.

Comme illustré sur les figures 4 et 5, le bâti 7 est pourvu d'un chemin **64** de came périphérique sur lequel le galet **60** inférieur est en appui et qui comprend une section **64A** haute (figure 4) et une section **64B** basse (figure 5). Lorsque le poussoir **40** est à l'aplomb de la section **64A** haute du chemin **64** de came, le galet **60** inférieur le maintient, via le guide **48** externe, dans sa position inactive (figure 4), à l'encontre des efforts de rappel des ressorts **52, 62**. Lorsque le poussoir **40** est à l'aplomb de la section **64B** basse du chemin **64** de came, les ressorts **52, 62** maintiennent le poussoir **40** dans sa position active (figure 5).

Comme illustré sur la figure 3, l'installation 1 définit, autour de la roue **33** :

- une zone **ZI** inactive, où les poussoirs **40** sont écartés de la chaîne **8** et qui s'étend, dans l'exemple illustré, à l'opposé du brin **8B** engrené, entre le point **L** de libération et le point **E** d'engrenage (c'est-à-dire, dans l'exemple illustré, sur une extension angulaire d'environ 180°) ; dans la zone **ZI** inactive, les poussoirs **40** sont en position active, les galets **60** inférieurs roulant sur la section **64B** basse du chemin **64** de came ;

- une zone **ZA** d'armement, qui s'étend en aval (dans le sens de rotation de la roue **33,** qui est le sens horaire sur la figure 3) du point **E** d'engrenage et dans laquelle le chemin **64** de came présente une rampe de faible inclinaison (quelques degrés) qui raccorde la section **64B** basse à la section **64A** haute et dans laquelle les poussoirs **40** sont déplacés de leur position active à leur position inactive au fur et à mesure que les galets **60** inférieurs montent la rampe ;

- un point **V** de vêtissage, qui se trouve en aval de la zone **ZA** d'armement et où le chemin **64** de came présente un décrochement entre la section **64A** haute et la section **64B** basse, ce qui provoque, sous l'effet de la brusque descente du galet **60** inférieur de l'une à l'autre sous l'effet de la détente du ressort **62** de rappel, le passage des poussoirs **40** de leur position inactive à leur position active ;

- une section **ZV** de vêtissage, qui s'étend du point **V** de vêtissage au point **L** de libération et dans laquelle les poussoirs **40** sont en position active, les galets **60** inférieurs roulant sur la section **64B** basse du chemin **64** de came.

Comme illustré sur les figures 1 à 3, les préformes **2** sont chargées sur la roue **33,** en amont du point **V** de vêtissage, au moyen d'un dispositif **65** de transfert qui se présente par exemple sous forme d'une roue étoilée dont la rotation est synchronisée avec celle de la roue **33** et qui met les préformes **2** au pas défini par celle-ci.

La rotation de la roue **33** par rapport au bâti **7** entraîne chaque poussoir **40** (avec son galet **60** inférieur) dans un trajet circulaire le long duquel le galet **60** inférieur roule sur le chemin **64** de came. Au point **E** d'engrenage, où chaque poussoir **40** est dans sa position active, la queue **42** vient engrener l'embout **29** d'un mandrin **22** et l'alvéole **39** correspondante vient engrener la gorge **18** de la douille **14.**

Passé le point **E** d'engrenage, le poussoir **40** circule tout d'abord dans la zone **ZA** d'armement où il est déplacé vers sa position inactive par le galet **60** extérieur roulant sur la rampe du chemin **64** de came. Le poussoir déplace ainsi le mandrin **22** vers sa position inactive, ce qui permet, en amont du point **V** de vêtissage, le chargement d'une préforme **2** dont le col **4** est inséré entre la couronne **34** inférieure et la face **20** inférieure de la douille **14.** Dès lors que le poussoir **40** atteint le point **V** de vêtissage, le galet **60** inférieur saute de la section **64A** haute à la section **64B** basse du chemin **64** de came, ce qui, par l'action de rappel des ressorts **52**, **62**, déplace le poussoir **40** vers sa position active, celui-ci entraînant le mandrin **22** vers sa position active de sorte que la tête **25** vient s'emboîter dans le col **4** de la préforme **2.**

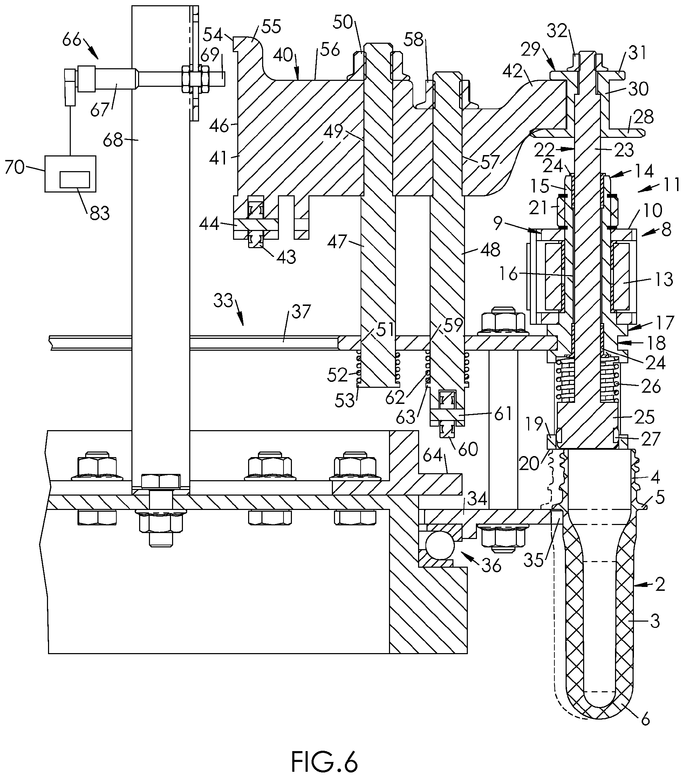

Compte tenu de la cadence de production, il peut arriver, comme illustré sur la figure 6, qu'une préforme **2** soit mal positionnée (c'est-à-dire que la préforme **2** n'est pas centrée par rapport au mandrin **22**) lorsque le poussoir **40** parvient au point **V** de vêtissage.

Dans ce cas, le mandrin **22** ne peut pas s'emboîter correctement dans le col **4** de la préforme **2** et reste bloqué dans une position proche de sa position inactive, tout en venant appuyer sur le bord du col **4,** qui se trouve ainsi comprimé entre le mandrin **22** et la couronne **34** inférieure.

Il n'est pas souhaitable que la préforme **2** soit maintenue dans cet état : elle risque en effet, au point L de libération, d'être violemment projetée hors de la roue **33,** ce qui est susceptible de causer des dommages aux objets (ou des blessures aux personnes) alentour.

Afin d'éviter de tels dommages, l'installation **1** est équipée d'un système **66** détrompeur permettant, dans la zone **ZV** de vêtissage, de détecter tout mauvais positionnement d'une préforme **2,** et de commander l'éjection de cette préforme **2.**

Plus précisément, le système **66** détrompeur comprend, en premier lieu, un capteur **67,** positionné dans la zone **ZV** de vêtissage, propre à détecter tout écartement d'un poussoir **40** de sa position active (signe que le mandrin **22** n'est pas dans sa propre position active et n'est donc pas emboîté dans le col **4** de la préforme **2**).

Comme illustré sur la figure 6, le capteur **67** est avantageusement monté sur un support **68** solidaire du bâti. Le capteur **67** est par exemple un capteur de proximité de type inductif, qui comprend une tête **69** produisant un champ magnétique oscillant (alimenté par une tension alternative). L'amplitude des oscillations diminue lorsqu'un objet métallique se trouve à proximité de la tête **69.**

En l'occurrence, le capteur **67** est positionné verticalement pour que la tête **69** se trouve à hauteur du méplat **54** en position active du poussoir **40.** Le capteur **67** est en outre positionné radialement pour que la tête **69** se trouve à quelques millimètres du méplat **54** en position active du poussoir **40.**

L'installation **1** comprend une unité **70** de contrôle à laquelle le capteur **67** est connecté et qui mesure le signal produit par la tête **69** (en l'occurrence l'amplitude du champ magnétique produit par celle-ci).

Le signal est comparé par l'unité **70** de contrôle à une valeur seuil. Tant que l'amplitude du signal est inférieure (ou supérieure, selon la conception du capteur **67**) à la valeur seuil, alors le poussoir **40** correspondant (et donc le mandrin **22**) est décrété occuper sa position active.

A contrario, dès que l'amplitude du signal est supérieure (ou inférieure, selon la conception du capteur **67**) à la valeur seuil, alors le poussoir **40** correspondant (et donc le mandrin **22**) est décrété écarté sa position active - de manière non désirée, le méplat **54** n'étant pas situé au droit de la tête **69.** Dans ce cas, l'unité **70** de contrôle génère un signal d'alerte qui déclenche l'éjection de la préforme **2** mal positionnée.

A cet effet, le système **66** détrompeur comprend un dispositif **71** d'éjection, positionné dans la zone **ZV** de vêtissage et qui comprend un actionneur **72** mobile entre :

- une position de libre passage dans laquelle l'actionneur **72** est écarté des poussoirs **40** (position occupée tant que les poussoirs **40** sont décrétés en position active), et
- une position d'éjection dans laquelle l'actionneur **72** déplace vers sa position inactive tout poussoir **40** détecté comme écarté de sa position active.

Le dispositif **71** d'éjection est positionné en aval du capteur **67,** selon un écartement angulaire suffisant, compte tenu de la vitesse de rotation de la roue **33,** pour permettre à l'unité **70** de contrôle de traiter les données reçues du capteur **67** et déclencher l'actionneur **72** si nécessaire.

Selon un mode de réalisation préféré, l'actionneur **72** se présente sous la forme d'une came montée coulissante verticalement, entre une position basse (correspondant à la position de libre passage) dans laquelle la came **72** est écartée des poussoirs **40,** et une position haute (correspondant à la position d'éjection) dans laquelle la came constituant l'actionneur **72** vient déplacer, via le galet **43** supérieur, le poussoir **40** vers sa position inactive.

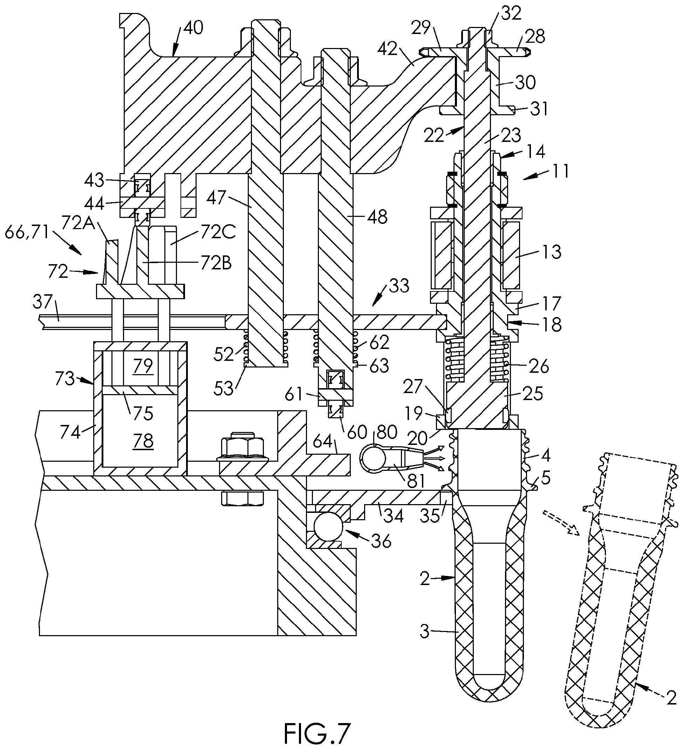

Plus précisément, comme illustré sur les figures 2 et 7, l'installation **1** comprend avantageusement un vérin **73** incluant :

- un corps **74** de vérin fixé sur le bâti **7,** et
- un piston **75** mobile par rapport au corps **74** de vérin, ce piston **75** portant, à une extrémité libre, la came constituant l'actionneur **72.**

Le vérin **73** est par exemple pneumatique, du type double effet, et comprend deux entrées **76, 77** de fluide débouchant respectivement dans une chambre **78** inférieure (pour commander la montée du piston **75** et donc de la came constituant l'actionneur **72**) et dans une chambre **79** supérieure (pour commander la descente du piston **75** et donc de la came constituant l'actionneur **72**). En variante, le vérin **73** est du type simple effet ; il comprend dans ce cas une unique entrée de fluide et est équipé d'un ressort de rappel qui sollicite le piston **75** vers sa position basse.

Pour éviter toute erreur due au temps de traitement des informations par l'unité **70** de contrôle, il est avantageux d'éjecter simultanément plusieurs préformes **2** (par exemple trois préformes **2**), à savoir la préforme **2** présumée mal positionnée ainsi que celles qui l'encadrent, la précèdent ou la suivent.

C'est pourquoi, dans l'exemple illustré sur la figure 7, la came constituant l'actionneur **72** comprend trois rampes juxtaposées et décalées angulairement l'une de l'autre, à savoir :

- une rampe **72A** interne qui, en position haute de la came constituant l'actionneur **72,** vient au contact du galet **43** supérieur positionné à l'emplacement **45A** interne sur un premier des trois poussoirs **40** concernés ;
- une rampe **72B** intermédiaire qui, en position haute de la came constituant l'actionneur **72,** vient au contact du galet **43** supérieur positionné à l'emplacement **45B** intermédiaire sur un deuxième des trois poussoirs **40** concernés ;
- une rampe **72C** externe qui, en position haute de la came constituant l'actionneur **72,** vient au contact du galet **43** supérieur positionné à l'emplacement **45C** externe sur le troisième poussoir **40.**

Le décalage angulaire entre les rampes **72A, 72B, 72C** est de préférence égal à l'écartement angulaire entre deux poussoirs **40** successifs, de sorte que les rampes **72A, 72B, 72C** déplacent simultanément les trois poussoirs **40** vers leur position inactive.

Ainsi déplacé vers sa position inactive, chaque poussoir **40** place à son tour le mandrin **22** dans sa position inactive, ce qui écarte la tête **25** du col **4** de la préforme **2** (la douille **14** étant bloquée en position par coopération de l'alvéole **39** avec la gorge **18**). La force centrifuge peut être suffisante pour provoquer l'éjection de la préforme **2** de la couronne **34** inférieure, mais un blocage n'est pas impossible. C'est pourquoi, ainsi qu'il apparaît sur la figure 7, il est préférable que l'installation 1 soit munie, au droit de l'actionneur **72,** d'une soufflette **80** dirigée vers le col **4** de chaque préforme **2.** Cette soufflette **80,** alimentée en air sous pression, comprend par exemple une tubulure **81** dirigée radialement vers l'extérieur de façon à produire un flux d'air suffisamment puissant pour déloger la préforme **2** de son échancrure **35** et l'éjecter ainsi de la couronne **34** inférieure, comme illustré en pointillés sur la figure 7.

Chaque préforme **2** ainsi éjectée peut être récupérée dans un bac d'où, après une vérification de sa conformité formelle, elle peut être réintroduite dans la roue **33.**

Afin d'éjecter la préforme **2** mal positionnée, on comprend qu'il est nécessaire de commander l'actionneur **72** au bon moment. Le déclencher une fraction de seconde trop tôt (ou trop tard) conduirait en effet à éjecter une (ou plusieurs) préforme(s) **2** bien positionnée(s) au lieu de la préforme **2** mal positionnée.

C'est pourquoi il convient que l'unité **70** de contrôle puisse identifier le poussoir **40** concerné et connaître sa position angulaire instantanée, de façon à déclencher l'actionneur **72** au bon moment.

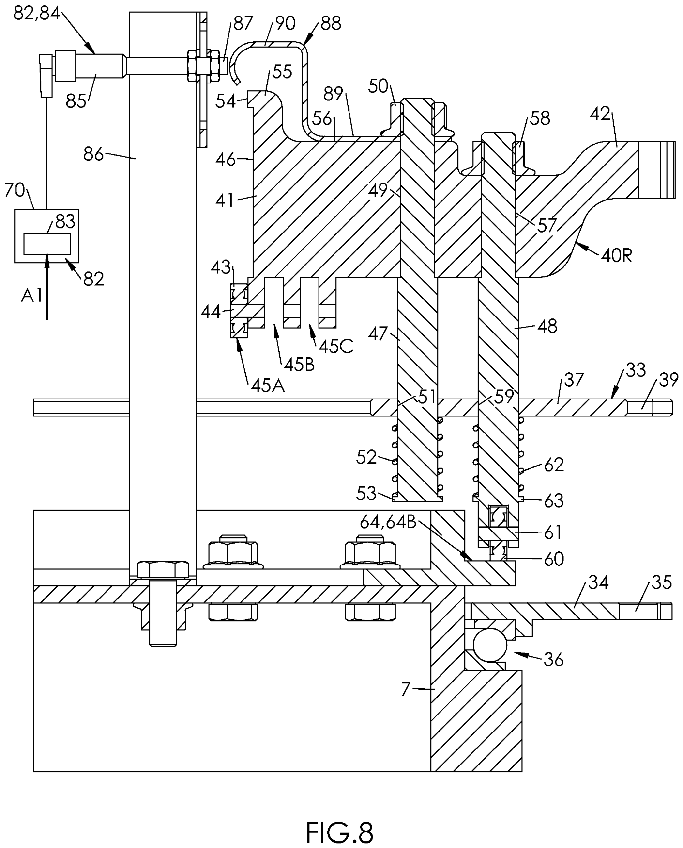

L'installation 1 comprend à cet effet un dispositif **82** de détermination de la position angulaire instantanée de la roue **33.** Ce dispositif **82** comprend un calculateur **83** intégré à l'unité **70** de contrôle (cf. figure 8). Ce calculateur peut se présenter sous forme d'un composant électronique spécifique, ou sous forme d'un module logiciel implémenté dans un processeur général de l'unité **70** de contrôle.

Ce calculateur **83** reçoit à chaque instant d'un élément tournant de référence positionné sur la ligne de production une information de position angulaire lui permettant de calculer la position angulaire instantanée de cet élément tournant. Cet élément tournant de référence est, typiquement, le carrousel de la souffleuse, qui est généralement de grand diamètre (en comparaison notamment du diamètre, relativement plus faible, de la roue **33**).

Compte tenu de la continuité de la ligne de production, et en vertu de rapports de réduction, il est possible de déduire de la position angulaire de l'élément tournant de référence la position angulaire instantanée de la roue **33,** de sorte qu'il n'est pas nécessaire d'équiper tous les éléments tournants de codeurs angulaires (de type roulement instrumenté).

En effet, à cadence de production stabilisée, les vitesses de rotation des divers éléments tournants sont constantes. Si l'on note W1 la vitesse de rotation du carrousel de la souffleuse, et W2 la vitesse de rotation de la roue 33, alors ces deux vitesses de rotation sont dans un rapport tel que :

$$W2 = K \cdot W1 \qquad\qquad (1)$$

où K représente le rapport de réduction de la roue 33 par rapport au carrousel, ce rapport K étant égal au quotient de leurs diamètres respectifs.

A cadence de production stabilisée, W2 étant constante, on peut exprimer ainsi l'angle de rotation de la roue 33 :

$$A = W2 \cdot t \qquad\qquad (2)$$

Soit, compte tenu de l'égalité (1) :

$$A = K \cdot W1 \cdot t \qquad\qquad (3)$$

où t représente le temps.

Ainsi, en connaissant la vitesse W1 de rotation du carrousel de la souffleuse, on peut en déduire la position A angulaire instantanée de la roue 33.

La vitesse W1 peut être calculée à l'aide d'une information angulaire fournie par un codeur monté sur le carrousel de la souffleuse. Un tel codeur fonctionne par exemple par effet Hall et fournit au calculateur **83** des impulsions à une fréquence proportionnelle, dont le calculateur **83** déduit par simple division la vitesse W1 de rotation du carrousel.

Le calculateur **83** en déduit alors la position angulaire A instantanée de la roue **33** par application de l'équation (3).

Cependant, le rapport K de réduction n'est pas un nombre entier ; quel que soit le nombre de décimales avec lequel il est mémorisé dans l'unité **70** de contrôle, l'équation (3) finira toujours par dériver au cours du temps, en raison de l'approximation dans la programmation du nombre K et du grand nombre de rotations effectuées par la roue **33** au fil d'une production.

C'est pourquoi il est prévu de réinitialiser la position A angulaire de la roue **33** à chaque tour de celle-ci, qui peut être aisément détecté sans recourir à un complexe (et coûteux) codeur.

Ainsi, pour éviter les dérives et permettre d'obtenir une valeur fiable pour la position A angulaire de la roue **33,** il est préférable que le dispositif **82** intègre un système **84** d'initialisation permettant, à chaque tour, de remettre arbitrairement à la valeur nulle la position angulaire A de la roue **33.**

Ce système **84** d'initialisation comprend, outre une programmation du calculateur **83** permettant la remise à zéro de la position angulaire A de la roue **33** à chaque tour, un capteur **85** d'initialisation avantageusement positionné dans la zone **ZI** inactive en étant monté sur un support **86** solidaire du bâti **7.** Le capteur **85** d'initialisation, relié à l'unité **70** de contrôle (et plus précisément au calculateur **83**), est par exemple un capteur de proximité de type inductif, qui comprend une tête **87** produisant un champ magnétique oscillant (alimenté par une tension alternative). L'amplitude des oscillations diminue lorsqu'un objet métallique se trouve à proximité de la tête **87.** Par convention, on affecte la valeur nulle (0°) à la position angulaire d'un poussoir **40R** de référence passant au droit du capteur **85** d'initialisation. Sur la roue, la position angulaire de chaque poussoir **40** est comprise entre 0° et 360° et peut être déduite de la position angulaire du poussoir **40R** de référence.

Dans l'exemple illustré, la tête **87** du capteur **85** d'initialisation s'étend à une hauteur supérieure aux doigts **55** des poussoirs **40** en position active, et le poussoir **40R** de référence est pourvu d'un drapeau **88** sous forme d'une lamelle de métal rapportée et fixée sur la face **56** supérieure du corps **41** du poussoir **40** de référence. Comme illustré sur la figure 8, le drapeau **88** présente une partie **89** inférieure par laquelle le drapeau **88** est fixé sur le corps **41** du poussoir **40R** de référence (en étant par exemple emmanché sur l'extrémité supérieure du guide **47** interne et maintenu par l'écrou **50**), et une partie **90** supérieure qui s'étend en saillie verticalement au-dessus du corps **41,** sensiblement à l'aplomb du doigt **55.** Le capteur **85** d'initialisation est positionné à hauteur de la partie **90** supérieure du drapeau **88** (en position active du poussoir **40R** de référence), de sorte que le passage du drapeau **88** au droit de la tête **87** modifie l'amplitude du champ magnétique produit, ce dont le calculateur **83** déduit le passage du poussoir **40R** de référence par l'angle nul.

Pour positionner angulairement les poussoirs **40** sur la roue, on attribue à chacun un numéro entier i compris entre 1 et N (où N est le nombre de poussoirs équipant la roue), où 1 est arbitrairement affecté au poussoir **40R** de référence. Dans l'exemple illustré, où N=45, l'écartement angulaire entre deux poussoirs **40** successifs est de 8°. A l'instant où le poussoir **40R** de référence passe au droit du capteur **85** d'initialisation, chaque poussoir **40** de numéro i occupe la position angulaire 8i (exprimée en degrés). Ainsi, à cet instant le poussoir **40** ayant le numéro 12 occupe la position angulaire 96°. La vitesse de rotation (présumée constante) de la roue **33,** déduite pour chaque poussoir **40** de l'équation (3) permet au calculateur **83,** à chaque instant, d'extrapoler la position angulaire instantanée de chaque poussoir **40,** et en particulier du poussoir **40** détecté par le capteur **67** comme écarté de sa position active dans la zone **ZV** de vêtissage. L'écart angulaire entre le capteur **67** et l'actionneur **72** étant fixe et connu, l'unité **70** de contrôle peut à l'avance calculer l'instant où ce poussoir **40** parviendra au droit de l'actionneur **72** et déclencher celui-ci, le cas échéant en lui adressant un signal de manière anticipée pour tenir compte du temps de réponse du vérin **73** et du temps nécessaire à l'actionneur **72** pour atteindre sa position haute.

Ainsi et par exemple, à supposer que l'unité **70** de contrôle ait détecté une variation du champ magnétique du capteur **67** à un instant to, et dans l'hypothèse où :

- l'écartement angulaire entre le capteur **67** et l'actionneur est de 24°,
- la vitesse angulaire de la roue **33** est constante et égale à 18 tours/min (soit une cadence d'environ 50 000 préformes **2** par heure),
- le temps de transmission du signal du capteur **67** à l'unité **70** de contrôle est de 0,01s,
- le temps de traitement par l'unité **70** de contrôle est de 0,01s,
- le temps de transmission du signal de l'unité **70** de contrôle à l'actionneur est de 0,01s,
- le temps de réponse (c'est-à-dire de mise sous pression) du vérin **73** est de 0,05s,
- le temps de montée de l'actionneur **72** de sa position basse à sa position haute est de 0,1s,

alors l'unité **70** de contrôle doit envoyer son signal d'alerte (c'est-à-dire commander le déplacement de l'actionneur **72**) à $t_0$+0,04s.

Sur les figures, on a positionné le système **66** détrompeur (incluant le capteur **67** et l'actionneur **72**) assez loin du point **V** de vêtissage pour des raisons de clarté ; en réalité, le système **66** détrompeur être positionné au plus près du point **V** de vêtissage, par exemple quelques degrés en aval de celui-ci, de façon à effectuer rapidement la détection d'une préforme **2** mal positionnée et son éjection, ce qui minimise le risque que la préforme **2** soit éjectée de manière incontrôlée avant de parvenir au droit du système **66** détrompeur.

Dès lors que la (les) préforme(s) **2** est (sont) éjectées, l'actionneur **72** est immédiatement replacé dans sa position basse, pour éviter d'éjecter toute autre préforme **2** qui serait bien positionnée.

L'installation **1** qui vient d'être décrite permet, grâce à son système **66** détrompeur, de garantir la continuité de la production même en cas de défaut de positionnement d'une préforme **2,** l'arrêt de la roue **33** n'étant pas nécessaire (ni même son ralentissement) pour l'éjection d'une préforme **2** mal positionnée. En outre, l'éjection étant réalisée de manière contrôlée, un bac de récupération des préformes éjectée peut être prévu, de façon à protéger les matériels et les personnels alentour).

Il résulte de l'architecture qui vient d'être décrite les avantages suivants.

D'abord, le fait d'utiliser l'information angulaire issue d'un élément tournant de référence pour en déduire par calcul la position angulaire de la roue **33** permet d'éviter d'avoir à équiper celle-ci d'un codeur, au bénéfice de la simplicité de l'installation **1.**

Ensuite, l'initialisation de la position angulaire de la roue **33** faite à chaque tour permet d'éviter les dérives dans ce calcul, dues aux approximations nécessaires des coefficients non entiers programmés dans le calculateur **83,** au bénéfice de la fiabilité de l'installation **1.**

La position angulaire ainsi calculée de la roue **33** est précise, d'où résulte la précision et la rapidité avec laquelle les préformes **2** mal positionnées peuvent en être éjectées.

Ces avantages contribuent à l'efficacité avec laquelle les préformes **2** mal positionnées sont éjectées de la roue **33,** ce qui garantit la continuité de la production et la sécurité de l'installation 1, tant pour le matériel que pour le personnel.

**Revendications**

1. Ligne de production de récipients par soufflage ou étirage soufflage de préformes, la ligne de production comprenant :

   - un élément tournant auxiliaire,

- un élément tournant de référence muni d'un moyen de détermination de la position angulaire instantanée de l'élément tournant de référence,
- la ligne de production présentant une continuité d'entrainement avec un rapport de réduction entre l'élément tournant de référence et l'élément tournant auxiliaire,

**caractérisée en ce qu'**elle est munie d'un dispositif (82) de détermination de la position angulaire instantanée (33) de l'élément tournant auxiliaire, ledit dispositif (82) comprenant :

- un capteur (85) d'initialisation capable à chaque tour de l'élément tournant auxiliaire de déterminer un instant initial pour lequel la position angulaire de l'élément tournant auxiliaire est nulle, et
- un calculateur (83) relié au capteur (85) d'initialisation et recevant à chaque instant une information de position angulaire instantanée dudit élément tournant de référence, le calculateur (83) étant apte, en vertu dudit rapport de réduction et de l'instant initial, à déduire la position angulaire instantané de l'élément tournant auxiliaire.

2. Ligne de production selon la revendication 1, comprenant

- une installation (1) de transport de préformes comprenant un bâti (7) fixe, l'élément tournant auxiliaire étant une roue (**33**) de l'installation de transport de préformes, la roue (**33**) étant en rotation par rapport au bâti (**7**) fixe, et
- une souffleuse, les préformes transportées par l'installation (1) de transport étant conformées en récipients au sein de la souffleuse, ledit élément tournant de référence étant un carrousel de la souffleuse sur lequel sont montés une pluralité de moules ayant l'empreinte des récipients.

3. Ligne de production selon la revendication 2, dans laquelle les préformes sont des corps (**2**) creux en matière plastique ayant chacun un corps (**3**) cylindrique, un col (**4**) et une collerette (**5**) séparant le col (**4**) du corps (**3**), dans laquelle l'installation (**1**) de transport de préformes est munie d'une chaîne (**8**) de transport comprenant une pluralité de maillons (**9**) ayant chacun une platine (**10**), une douille (**14**) fixée sur la platine (**10**) et un mandrin (**22**) pourvu d'une tête (**25**) et monté en translation par rapport à la douille (**14**) entre une position inactive dans laquelle la tête (**25**) est logée dans la douille (**14**), et une position active dans laquelle la tête (**25**) fait saillie par rapport à une face (**20**) inférieure de la douille (**14**) pour s'emmancher dans le col (**4**) de la préforme (**2**) ; et dans laquelle ladite roue (**33**) engrène la chaîne (**8**) de transport et comprend :

  ◦ une couronne (**34**) montée en rotation par rapport au bâti (**7**),
  ◦ une pluralité de poussoirs (**40**) propres chacun à venir en prise d'engrenage avec un mandrin (**22**), chaque poussoir (**40**) étant monté en translation par rapport à la couronne (**34**) entre une position inactive dans laquelle, lorsque le poussoir (**40**) est en prise avec un mandrin (**22**), il place celui-ci en position inactive, et une position active dans laquelle, lorsque le poussoir (**40**) est en prise avec un mandrin (**22**), il place celui-ci en position active.

4. Ligne de production selon la revendication 3, dans laquelle l'installation (1) de transport de préformes définit une zone (**ZV**) de vêtissage dans laquelle les poussoirs (**40**) en prise d'engrenage avec des mandrins (**22**) sont placés en position active, l'installation (1) de transport de préformes comportant un système (**66**) détrompeur comprenant :

- un capteur (**67**) positionné dans la zone (**ZV**) de vêtissage, propre à détecter tout écartement d'un poussoir (**40**) de sa position active ; et
- un dispositif (**71**) d'éjection positionné dans la zone (**ZV**) de vêtissage et comprenant un actionneur (**72**) mobile entre un position de libre passage dans laquelle l'actionneur (**72**) est écarté des poussoirs (**40**), et une position d'éjection dans laquelle l'actionneur (**72**) déplace vers sa position inactive tout poussoir (**40**) détecté comme écarté de sa position active.

5. Ligne de production selon la revendication 4, dans laquelle le système (**66**) détrompeur comporte un vérin (**73**) comprenant un corps (**74**) de vérin solidaire du bâti (**7**) et un piston (**75**) monté coulissant dans le corps (**74**) de vérin, et dans laquelle l'actionneur (**72**) est constitué par une came solidaire du piston (**75**).

6. Ligne de production selon la revendication 5, dans laquelle chaque poussoir (**40**) porte un galet (**43**) supérieur qui vient coopérer avec la came constituant l'actionneur (**72**), lorsque l'actionneur (**72**) est en position d'éjection.

7. Ligne de production selon l'une des revendications 5 à 6, dans laquelle la came constituant l'actionneur (**72**) comprend trois rampes (**72A, 72B, 72C**) décalées angulairement, et dans laquelle trois poussoirs (**40**) adjacents comprennent des galets (**43**) supérieurs décalés radialement dans la roue (**33**), chacun des galet (**43**) étant apte à coopérer avec une rampe (**72A, 72B, 72C**) en position d'éjection de l'actionneur.

8. Ligne de production selon l'une de revendication 4 à 7, dans laquelle chaque poussoir (**40**) comprend un corps (**41**) métallique incluant un méplat (**54**) en saillie qui, en position active, s'étend à hauteur du capteur (**67**).

9. Ligne de production selon l'une de revendication 4 à 8, dans laquelle l'un des poussoirs (**40**) est pourvu d'un drapeau (**88**) muni d'une partie (**90**) saillante qui s'étend à hauteur du capteur (**85**) d'initialisation.

10. Ligne de production selon l'une de revendication 3 à 9, comprenant une unité (**70**) de contrôle reliée au capteur (**67**) et à l'actionneur (**72**) du dispositif détrompeur, l'unité (**70**) de contrôle étant programmée pour commander l'actionneur (**72**) lorsqu'un poussoir (**40**) est détecté par le capteur (**67**) dans sa position inactive.

11. Ligne de production selon l'une de revendication 1 à 10, dans laquelle le capteur (**85**) d'initialisation est un capteur de proximité.

12. Ligne de production selon l'une de revendication 1 à 11, dans laquelle le dispositif de détermination de la position angulaire instantanée de l'élément tournant de référence est un codeur, par exemple montée sur un arbre de rotation d'une roue d'entrainement directe du carrousel de la souffleuse.

**Patentansprüche**

1. Straße zur Fertigung von Behältern durch Blasen oder Streckblasen von Vorformlingen, wobei die Fertigungsstraße Folgendes umfasst:

- ein Hilfsdrehelement,
- ein Referenzdrehelement, das mit einem Mittel zur Bestimmung der momentanen Winkellage des Referenzdrehelements ausgestattet ist,
- wobei die Fertigungsstraße eine Antriebskontinuität mit einem Untersetzungsverhältnis zwischen dem Referenzdrehelement und dem Hilfsdrehelement aufweist, **dadurch gekennzeichnet, dass** sie mit einer Vorrichtung (82) zur Bestimmung der momentanen Winkellage (33) des Hilfsdrehelements ausgestattet ist, wobei die Vorrichtung (82) Folgendes umfasst:

- einen Initialisierungssensor (85), der dazu in der Lage ist, bei jeder Umdrehung des Hilfsdrehelements einen Anfangszeitpunkt zu bestimmen, für den die Winkellage des Hilfsdrehelements null ist, und
- einen Rechner (83), der mit dem Initialisierungssensor (85) verbunden ist und zu jedem Zeitpunkt eine Information der momentanen Winkellage des Referenzdrehelements empfängt, wobei der Rechner (83) dazu in der Lage ist, anhand des Untersetzungsverhältnisses und des Anfangszeitpunkts die momentane Winkellage des Hilfsdrehelements abzuleiten.

2. Fertigungsstraße nach Anspruch 1, umfassend

- eine Einrichtung (1) zum Transport von Vorformlingen, die ein festes Gestell (7) umfasst, wobei das Hilfsdrehelement ein Rad (33) der Vorformlingtransporteinrichtung ist, wobei sich das Rad (33) in Bezug auf das feste Gestell (7) dreht, und
- ein Gebläse, wobei die durch die Vorformlingtransporteinrichtung (1) transportierten Vorformlinge innerhalb des Gebläses zu Behältern geformt werden, wobei das Referenzdrehelement ein Karussell des Gebläses ist, an dem mehrere Formen montiert sind, die den Abdruck der Behälter aufweisen.

3. Fertigungsstraße nach Anspruch 2, wobei die Vorformlinge Hohlkörper (2) aus Kunststoff sind, die jeder einen zylindrischen Körper (3), einen Hals (4) und einen Kragen (5), der den Hals (4) vom Körper (3) trennt, aufweisen, wobei die Vorformlingtransporteinrichtung (1) mit einer Transportkette (8) ausgestattet ist, die mehrere Glieder (9) umfasst, die jedes eine Platte (10), eine an der Platte (10) befestigte Hülse (14) und einen Dorn (22) umfassen, der mit einem Kopf (25) versehen und in Bezug auf die Hülse (14) zwischen einer Ruhestellung, in der der Kopf (25) in der Hülse (14) liegt, und einer Arbeitsstellung, in der der Kopf (25) in Bezug auf eine Innenseite (20) der Hülse (14) vorsteht, um sich in den Hals (4) des Vorformlings (2) zu schieben, verschiebbar ist; und wobei das Rad (33) mit der Transportkette (8) in Eingriff steht und Folgendes umfasst:

o einen Kranz (34), der in Bezug auf das Gestell (7) drehbar montiert ist,
o mehrere Stößel (40), die jeder dazu in der Lage sind, mit einem Dorn (22) in Eingriff zu kommen, wobei jeder Stößel (40) in Bezug auf den Kranz (34) zwischen einer Ruhestellung, in der er, wenn der Stößel (40) mit einem Dorn (22) in Eingriff steht, diesen in die Ruhestellung bringt, und einer Arbeitsstellung, bei der er, wenn der Stößel (40) mit einem Dorn (22) in Eingriff steht, diesen in die Arbeitsstellung bringt, verschiebbar montiert ist.

4.   Fertigungsstraße nach Anspruch 3, wobei die Vorformlingtransporteinrichtung (1) einen Überzugsbereich (ZV) definiert, in dem die Stößel (40), die mit den Dornen (22) in Eingriff stehen, in die Arbeitsstellung gebracht werden, wobei die Vorformlingtransporteinrichtung (1) ein Verwechselungssicherungssystem (66) aufweist, das Folgendes umfasst:

- einen Sensor (67), der im Überzugsbereich (ZV) positioniert und dazu in der Lage ist, jede Abweichung eines Stößels (40) von seiner Arbeitsstellung zu detektieren; und
- eine Ausstoßvorrichtung (71), die im Überzugsbereich (ZV) positioniert ist und einen Aktuator (72) umfasst, der zwischen einer freien Durchlassstellung, in der der Aktuator (72) von den Stößeln (40) beabstandet ist, und einer Ausstoßstellung, in der der Aktuator (72) jeden Stößel (40), der als von seiner Arbeitsstellung beabstandet detektiert wurde, in seine Ruhestellung bringt.

5.   Fertigungsstraße nach Anspruch 4, wobei das Verwechselungssicherungssystem (66) einen Zylinder (73) aufweist, der einen fest mit dem Gestell (7) verbundenen Zylinderkörper (74) und einen verschiebbar im Zylinderkörper (74) montierten Kolben (75) umfasst, und wobei der Aktuator (72) durch einen fest mit dem Kolben (75) verbundenen Nocken ausgebildet ist.

6.   Fertigungsstraße nach Anspruch 5, wobei jeder Stößel (40) eine obere Rolle (43) trägt, die mit dem Nocken, der den Aktuator (72) ausbildet, zusammenwirkt, wenn sich der Aktuator (72) in der Ausstoßstellung befindet.

7.   Fertigungsstraße nach einem der Ansprüche 5 bis 6, wobei der Nocken, der den Aktuator (72) ausbildet, drei winkelmäßig versetzte Steigungen (72A, 72B, 72C) umfasst und wobei drei benachbarte Stößel (40) obere Rollen (43) umfassen, die im Rad (33) radial versetzt sind, wobei jede der Rollen (43) dazu in der Lage ist, in der Ausstoßstellung des Aktuators mit einer Steigung (72A, 72B, 72C) zusammenzuwirken.

8.   Fertigungsstraße nach einem der Ansprüche 4 bis 7, wobei jeder Stößel (40) einen metallenen Körper (41) umfasst, der eine vorstehende Abflachung (54) beinhaltet, die sich in der Arbeitsstellung in Höhe des Sensors (67) erstreckt.

9.   Fertigungsstraße nach einem der Ansprüche 4 bis 8, wobei einer der Stößel (40) eine Flagge (88) aufweist, die mit einem vorstehenden Teil (90) ausgestattet ist, der sich in Höhe des Initialisierungssensors (85) erstreckt.

10.  Fertigungsstraße nach einem der Ansprüche 3 bis 9, umfassend eine Steuereinheit (70), die mit dem Sensor (67) und mit dem Aktuator (72) der Verwechselungssicherungsvorrichtung verbunden ist, wobei die Steuereinheit (70) dazu programmiert ist, den Aktuator (72) zu steuern, wenn ein Stößel (40) durch den Sensor (67) in seiner Ruhestellung detektiert wird.

11.  Fertigungsstraße nach einem der Ansprüche 1 bis 10, wobei der Initialisierungssensor (85) ein Näherungssensor ist.

12.  Fertigungsstraße nach einem der Ansprüche 1 bis 11, wobei die Vorrichtung zur Bestimmung der momentanen Winkellage des Referenzdrehelements ein Codierer ist, der beispielsweise an einer Drehachse eines Rads zum direkten Antrieb des Karussells des Gebläses montiert ist.

## Claims

1.   Production line for producing containers by blow-moulding or stretch-blow-moulding preforms, the production line comprising:

- an auxiliary rotary element,
- a reference rotary element equipped with a means for determining the instantaneous angular position of the reference rotary element,
- the production line having drive continuity with a reduction ratio between the reference rotary element and the auxiliary rotary element,

**characterized in that** it is equipped with a device (82) for determining the instantaneous angular position (33) of the auxiliary rotary element, the said device (82) comprising:

- an initializing sensor (85) capable for each revolution of the auxiliary rotary element of determining an initial instant at which the angular position of the auxiliary rotary element is zero, and
- a computer (83) connected to the initializing sensor (85) and at each instant receiving information regarding the instantaneous angular position of the said reference rotary element, the computer (83) being able, on the basis of the said reduction ratio and of the initial instant, to deduce the instantaneous angular position of the auxiliary rotary element.

2. Production line according to Claim 1, comprising

- a preform conveying installation (1) comprising a fixed structure (7), the auxiliary rotary element being a wheel (33) of the preform conveying installation, the wheel (33) being in rotation with respect to the fixed structure (7), and
- a blower, the preforms conveyed by the conveying installation (1) being shaped into containers within the blower, the said reference rotary element being a carousel of the blower on which carousel are mounted a plurality of moulds having the impression of the containers.

3. Production line according to Claim 2, in which the preforms are hollow bodies (2) made of plastic, each having a cylindrical body (3), a neck (4) and a flange (5) separating the neck (4) from the body (3),
in which the preform conveying installation (1) is equipped with a conveying chain (8) comprising a plurality of links (9) each having a plate (10), a bushing (14) fixed to the plate (10) and a pin (22) provided with a head (25) and mounted with the ability to effect a translational movement with respect to the bushing (14) between an inactive position in which the head (25) is housed inside the bushing (14), and an active position in which the head (25) projects from a lower face (20) of the bushing (14) to fit into the neck (4) of the preform (2); and
in which the said wheel (33) meshes with the conveying chain (8) and comprises:

o a ring (34) mounted with the ability to effect a rotational movement with respect to the structure (7),
o a plurality of pushers (40) each able to come into engagement with a pin (22), each pusher (40) being mounted with the ability to effect a translational movement with respect to the ring (34) between an inactive position in which, when the pusher (40) is in mesh with a pin (22), it places the latter in the inactive position, and an active position in which, when the pusher (40) is in mesh with a pin (22), it places the latter in an active position.

4. Production line according to Claim 3, in which the preform conveying installation (1) defines an engagement zone (ZV) in which the pushers (40) in mesh with pins (22) are placed in an active position, the preform conveying installation (1) comprising a poka-yoke system (66) comprising:

- a sensor (67) positioned in the engagement zone (ZV), able to detect any deviation of a pusher (40) from its active position; and
- an ejection device (71), positioned in the engagement zone (ZV) and comprising an actuator (72) able to move between a free-passage position in which the actuator (72) is spaced away from the pushers (40) and an injection position in which the actuator (72) moves towards its inactive position any pusher (40) that has been detected as having deviated from its active position.

5. Production line according to Claim 4, in which the poka-yoke system (66) comprises a cylinder actuator (73) comprising an actuator cylinder (74) secured to the structure (7) and a piston (75) mounted with the ability to slide in the actuator cylinder (74), and in which the actuator (72) consists of a cam secured to the piston (75).

6. Production line according to Claim 5, in which each pusher (40) bears an upper roller (43) which can collaborate with the cam constituting the actuator (72) when the actuator (72) is in the ejection position.

7. Production line according to one of Claims 5 and 6, in which the cam constituting the actuator (72) comprises three angularly offset ramps (72A, 72B, 72C), and in which three adjacent pushers (40) comprise upper rollers (43) which are radially offset in the wheel (33), each of the rollers (43) being able to collaborate with one ramp (72A, 72B, 72C) when the actuator is in the ejection position.

8. Production line according to one of Claims 4 to 7, in which each pusher (40) comprises a metal body (41) including a protruding flat (54) which, in the active position, extends level with the sensor (67).

9. Production line according to one of Claims 4 to 8, in which one of the pushers (40) is provided with a flag (88) equipped with a projecting part (90) which extends level with the initializing sensor (85).

10. Production line according to one of Claims 3 to 9, comprising a control unit (70) connected to the sensor (67) and to the actuator (72) of the poka-yoke device, the control unit (70) being programmed to operate the actuator (72) when a pusher (40) is detected by the sensor (67) to be in its inactive position.

11. Production line according to one of Claims 1 to 10, in which the initializing sensor (85) is a proximity sensor.

12. Production line according to one of Claims 1 to 11, in which the device for determining the instantaneous angular position of the reference rotary element is an encoder, for example mounted on a shaft that turns a direct drive wheel of the carousel of the blower.

FIG.1

FIG.2

FIG.3

EP 3 359 474 B1

FIG.4

FIG.5

FIG.6

FIG.7

FIG.8

## RÉFÉRENCES CITÉES DANS LA DESCRIPTION

**Documents brevets cités dans la description**

- EP 0935572 A, Sidel
- FR 2872805